# EUROPEAN PATENT APPLICATION

(11) **EP 2 339 872 A1**
(43) Date of publication of application: **29.06.2011**
(21) Application number: 09814014.8
(22) Date of filing: 24.08.2009
(51) Int. Cl.: H04W 4/02

(54) **DE-MASSING METHOD OF POSITION ADVERTISING SERVICE BASED ON REGIONAL STRATEGY AND SYSTEM THEREOF**

(30) Priority: 16.09.2008 CN 200810216187
(71) Applicant: ZTE Corporation, Shenzhen, Guangdong 518057 (CN)
(72) Inventor: JIANG, Tianchao, Shenzhen Guangdong 518057 (CN); PENG, Yonglin, Shenzhen Guangdong 518057 (CN); XU, Yiliang, Shenzhen Guangdong 518057 (CN)
(74) Representative: Jansen, Cornelis Marinus
(86) International application number: PCT/CN2009/073443
(87) International publication number: WO 2010/031294

(57) **Abstract**

The present invention a de-massing method of position advertising service based on an area strategy and a system thereof. The method includes the following steps: the user number in the corresponding area is analyzed according to the data request of the position advertising service; the area state of the area corresponding to the current data request is checked; the user attribute of the user number in the corresponding area is obtained; the area strategy of the area corresponding to the user attribute is configured; position advertising information is filtered according to the area strategy, and then transmitted to the user number in the corresponding area.

## Description

### Filed of the Invention

The present invention relates to mobile communication wireless service field, especially to a de-massing method of position advertising service based on an area strategy and an improved system thereof.

### Background of the Invention

With the rapid development of the mobile communication network, particularly the coming of the 3G age, the competition among the operators becomes severe, added service scope needs to be expanded to improve the growth point; at the same time, with the continual progress of the society, different user groups also want to obtain more pertinent and useful information by considering the own career and the own part, while as the government department providing service for the public hopes to pertinently transmit the commonweal information such as weather forecast, warning of natural disaster and the like to the user groups of specific area through efficient method to be used in disaster prevention and relief, which needs to proceed from the area to de-mass the service. The de-massing means subdividing the user groups, and distinguishing different services according to career, area, age and the like, and therefore improving the pertinence and efficiency of the information issuing by using various pertinent strategies in the position advertising marketing. The position advertising service issues the information to the mobile terminal user by using the modern wireless mobile communication network, using the signaling monitoring device to obtain the information about the position variation of the user(s) and the like, and using the legal service treatment and combining the information platform such as short message service platform, multimedia messaging service platform and the like, which is a new implementation method of value added service, and is expected to be developed further along the gradual expansion of the actual network operation.

However, due to the multitudinous information in information society and the numerous information demanders, without an efficient, rapid, and pertinent issuing method and service method, the different information can not meet the requirements of different demanders. The user wants to receive valuable advertisement, and the trade company also wants to efficiently transmit the issued advertisement(s) to the user. The inefficient application strategy restricts the development of the position service advertising marketing to a certain extent. The inefficient filtering strategy even can bring about lots of complaints to the position advertising, reduces the operation efficiency of the service system, and aggravates the burdens of the service system to the information issuing system network, it does not increase the profits of the operator, and also wastes lots of network resources of society.

Therefore, the prior art needs to be improved and developed.

### Summary of the Invention

The problem solves by the present invention is to provide a de-massing method of position advertising service based on an area strategy and a system thereof. The present invention can enhance the efficiency and pertinence of the service system advertising marketing, meanwhile can reduces the user complaints caused by the issuing of useless advertisements, can alleviate the impact of the service system to the information issuing system network, and can improve the operation efficiency of the service system, can increase the income of the operators and can further expands the efficient development of the position advertising in domestic service.

The present invention solves the above mentioned technical problems by using the following technical proposals:

A de-massing method of position advertising service based on an area strategy is provided according to one aspect of the present invention, and the method comprises the following steps:
A, according to data request(s) of the position advertising service, analyzing the user number in the corresponding area, and checking a area state of the area corresponding to the current data request, ;
B, obtaining the user attribute of the user number in the corresponding area, configuring the area strategy of the area corresponding to the user attribute ;
C, filtering position advertising information according to the area strategy, and then transmitted to the user number in the corresponding area.

step A of the method further comprises the following steps:
A11, judging whether the state of the area is in an efficient state or not;
A12, if it is in an efficient state, then entering step B; otherwise the current user will be discarded in inefficient state.

Step A of the above method further comprises the following steps:
A21, distinguishing the users are Local user and ecdemic user, according to the number segment of the user number in the area;
A22, ecdemic users of local province and other province are distinguished according to the number segment of the ecdemic user number.

The method also comprises the following steps after step A22:
A23, identifying the user is Short number user groups, according to the group attribute to which the user number segment in the area is subjected.

Step B of the method comprises the following steps:
B 11, detecting whether the current time is the efficient service time that allows the user to receive the information in the area or not;
B12, if it is the efficient service time, then entering step C; otherwise quitting the detecting process.

Step B11 of the method also comprises the following steps:
B 13, comparing whether the quantity of the issued information exceeds the upper limit of the information receiving quantity or not, if it exceeds, entering step B23, otherwise quitting the comparing process.

Step C of the method comprises the following steps:
C11, monitoring the continuous active number of days of the user in the area in preset days;
C12, judging whether the time limit condition of the permanent personnel in the area is met or not, if it is met, setting the user as the permanent personnel, and entering step C13, otherwise entering step C14;
C13, checking the attribute setting of the current area, and judging whether the permanent personnel in the current area is allowed to receive the advertising information or not, if it is allowed, then allowing the transmitting of the position advertising information, otherwise ending the service strategy filtering in advance.
C14, checking the attribute setting of the current area, and judging whether the nonpermanent personnel in the current area is allowed to receive the advertising information or not, if it is allowed, then allowing the transmitting of the position advertising information, otherwise ending the service strategy filtering in advance.

Step C of the method also comprises the following steps:
C21, judging whether the current number is local number or not, if it is local number, entering step C22, otherwise entering step C23;
C22, checking the attribute setting of the current area, and judging whether the local user in the current area is allowed to receive the advertising information or not, if it is allowed, then allowing the transmitting of the position advertising information, otherwise ending the service strategy filtering in advance.
C23, checking the attribute setting of the current area, and judging whether the ecdemic user in the current area is allowed to receive the advertising information or not, if it is allowed, then allowing the transmitting of the position advertising information, otherwise ending the service strategy filtering in advance.

A de-massing system of position advertising service based on an area strategy is provided according to other aspect of the present invention.

The de-massing system of position advertising service based on an area strategy is provided according to the present invention comprises: a service system, a signaling acquisition system communicated with the service system and a content system, wherein

The service system is adapted to analyse the user number in the area, to check the area state of the area corresponding to the current data request, to obtain the user attribute, and to configure the area strategy of the area corresponding to the user attribute;

The signaling acquisition system communicated with the service system communication is connected with an interface between a base station controller and a mobile switching center, and is adapted to analyse the user information and the cell information, and to transmit the information to the service system through a data link.

The content system , is adapted to filter the transmitting of the position advertising information according to the area strategy, realizing the de-massing of the position adverting service.

Compared with the prior art, the present invention has the following beneficial effects: the de-massing method of position advertising service based on a area strategy and the system thereof pertinently expands the position advertising marketing of the service system, reduces the issuing of inefficient advertising, alleviates the impact of the service system to the information issuing system network, improves the operation efficiency of the service system, increases the income of the operators, saves the social resources, and meets the information requirements of social individuals by using the wireless mobile communication network which has broad covering scope currently, and by combining the information of regional position, statistical characteristic of the user, requirement characteristic of the group and the like.

Other characteristics and advantages of the present invention will be described in the following specification, and will be apparent partly from the specification and embodiments of the present invention. The objects and other advantages can be realized and obtained through the structure of the specification, claims, and the drawings.

### Brief Description of the Drawings

The drawings described herein provide a further understanding of the present invention, and form a part of the present application. The illustrative embodiments of the present invention and the description thereof are used to explain the present invention without unduly limiting the present invention. In the drawings:
Fig.1 is a schematic diagram of a position advertising system network frame of the present invention;

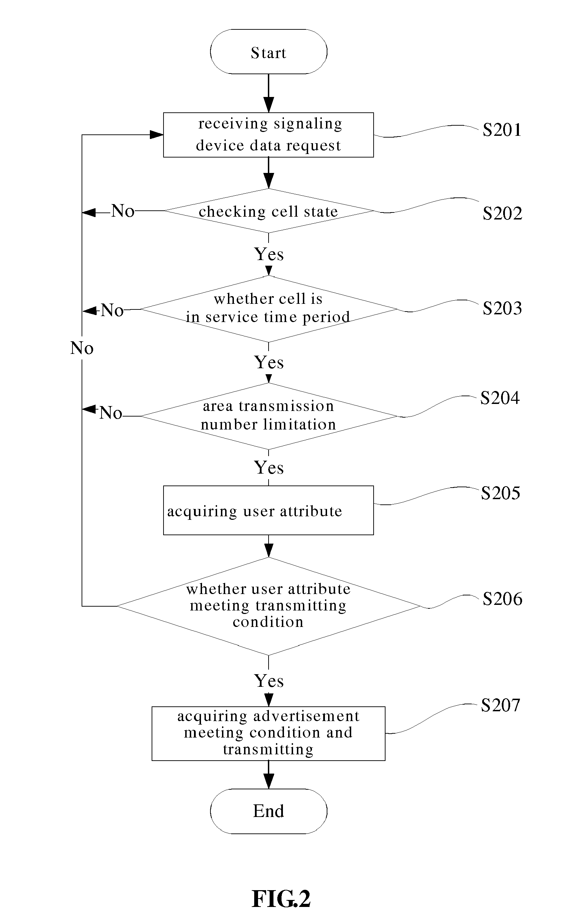

Fig.2 is a flowchart of a service system de-massing marketing strategy optimization of the present invention;
Fig.3 is a flowchart of a user attribute de-massing breakdown according to Fig.2 of the present invention.

### Detailed Description of the Embodiments

The detailed description and the embodiments of the de-massing position advertising service based on the area strategy will be detailed hereinafter in connection with the embodiments and drawings of the present invention so as to under the present invention better. What should be understood is that the preferable embodiments detailed hereafter are given by way of illustration only, and thus are not limitative of the present invention.

Under the condition of no conflict, the embodiments in the application and the characteristics of the embodiments can combine with each other.

Firstly, a de-massing method of position advertising service based on an area strategy and a system thereof are provided according to the embodiment of the present invention. The key point of the system consists in that the optimization and improvement of the service de-massing is realized by using the regional characteristics of the user, the user terminal attribute and the strategy of service de-massing contents. The socket communication and the position advertising system network frame including BTS, BSC, MSC and the like have been known well by the technician of the filed, and the details will not be described herein.

Generally, cell optimization strategy of the position advertising in the service system comprises four parts in which the area strategy part is the main part:

### I, area strategy

Through setting the effective time period of the area for receiving the information daily, the effective time period can be further divided into workdays and off days, for example Saturday and Sunday are off days and the like; through setting the description information of the area, the specific advertising is convenient to be issued aiming at the area when the advertising is de-massed. And an effective state is set in an area, effective or ineffective, only the service strategy filtering in the area can be monitored under effective state. The effective user in the area can be set in specific area, and no matter the user is local or outer, both can obtain the advertising according to the after-mentioned user under segment configuration. The number of the information for the user of each area will be strictly limited. That is to say, the upper limit of advertising number received by each user each day in the area is set, and the advertising will not be transmitted in the day in the event of exceeding the limit number. Whether the advertising is only transmitted to the permanent personnel of the specific area or not, whether the advertising is only transmitted to the nonpermanent personnel or not, whether the advertising is transmitted to all the users or not and the like are set. The area user can be protected by configuring the information to ensure the user obtain better service experience.

Through setting the area strategy, the information content can be pertinently issued by breaking down the areas, for example, some lecture information is issued near the university; some specific office procedure information is issued on government office area aiming at different executive functions; some safety and pre-warning information is issued on some emergency locking areas; some commercial sale promotion information is issued on some marketplace areas and the like. The de-massing combining with the user groups ensures the marketing more humanization and effectuation.

### II, User number segment strategy:

The local user number segment and the ecdemic user number segment are set by configuring the user number segment. The local user number segment can be set herein, and the non-local number segment can be taken as the ecdemic user; if further breakdown is required, the ecdemic user number segment also can be divided into the ecdemic user of the local province and the ecdemic user of the outer province; the groups can be distinguished and identified, and the short number user groups can be further produced, such as bicycle club group, clue group and the like. The fine sorted strategy group ensures the accuracy of the advertising to the user, and the further breakdown ensures the further breakdown of the marketing methods which has stronger pertinence and embodies the importance of service de-massing.

### III, Permanent personnel strategy:

An account is managed to log on a service platform, and permanent area person condition is configured, for example a certain number of days N is designated, and the number of days M of the local user in a area is monitored, when M is less than or equal to N, the permanent personnel is set. The setting of the permanent personnel provides convenience for government to issue some specific safety information to residents in specific time and embodies the importance of the service de-massing once again.

### IV, marketing contents issuing strategy:

An administrator logs on a service platform to type in marketing contents, such as advertising/commonweal information issued by government, and selects issuing condition: designated areas are selected aiming at the permanent personnel, local user, ecdemic user and all users according to the area description; the efficient time period of issuing contents can be further set the total number of content issuing, workday and off day; workday and off day both has the own time periods and the total quantity controls; and the state of the contents will be set as effective of ineffective.

In order to detail the idea of the present invention, an implementation method of the present invention will be detailed hereinafter in connection with the drawings.

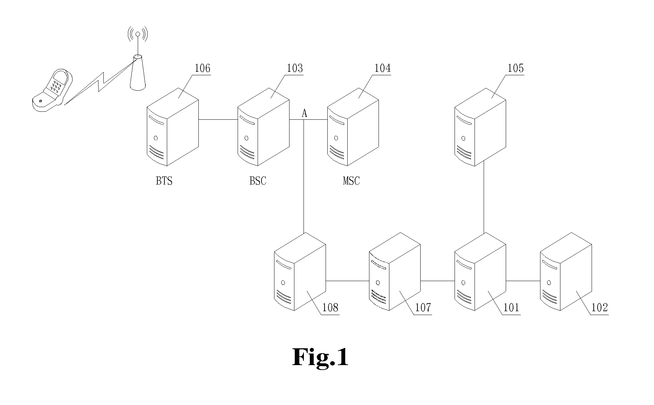

As shown in Fig.1, the service system mainly depends on a singling monitoring device, such as a signaling acquisition system 108, analyzes the user information and the cell information through an interface between a base station controller (BSC) 103 and a mobile switching center (MSC) 104 such as interface A, and transmits the message to a service system 101 through a data link. 106 in the Fig. is a base transceiver station (BTS) which is connected with a user terminal through an antenna in a communication way. Then the service system 101 obtains the advertising information issued by a content system 102 through a certain strategy and sorting measures, an issue the information to the terminal through entities of short message gateway and the like. The service system comprises a signaling acquisition system 108 and a data center 107, the signaling acquisition system 108, the data center 107 and the service system 101, the service system 101 and the content system 102 both uses a socket communication method, and process information interaction according to a certain information structure. The step 105 in Fig.1 is a short message/multimedia messaging service issuing system.

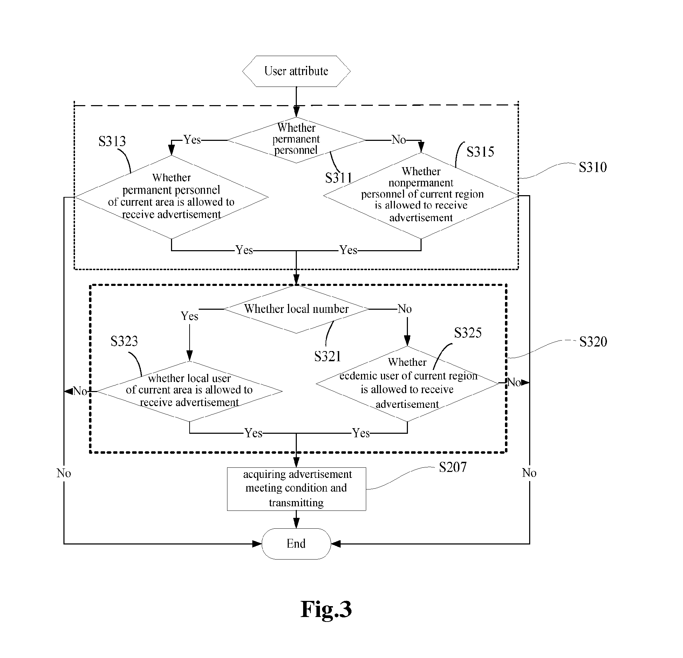

The service de-massing optimization strategy procedures of the service system are concretely as follows:
Step S201, the service system receives the user data information of each area monitored by the signaling device, herein the service system also can receive the user data information from multiple areas simultaneously, such as corresponding relationship data of multiple user cells;
Step S202, whether the received position state of each user area is effective or not is determined, if the state is ineffective, the current user will be discarded, otherwise when the area is in the effective state, the process will be continued;
Step S203, whether the current time is in the current service time period of the area or not is checked according to the user area, for example the area sets the effective time period of the workday is 9am to 12am and 14mp to 17pm, if the date of the current area user monitored by the signaling is not in the time period, the process will not be performed, otherwise the service is considered as in the effective service state, and the service procedure will be continued; the network loading can be greatly reduced after the filtering; and the service marketing proposals can be pertinently developed by setting different time points for different specific areas;
Step S204, whether the current area can continuously transmit advertising or not is checked according to the advertising number of that has been transmitted and the maximum transmission limitation of the area, otherwise the advertising will not be transmitted. At the same time, whether the advertising number of the current user area that has been transmitted reaches to the preset upper limit or not is checked, if yes, the advertising will not be transmitted, otherwise the service process will be continued. Herein the transmission number limitation of each user number in the area can be flexibly configured as the transmission number limitation of each user number each day, and the flow can be effectively controlled through the limitation.
Step S205, the user attribute is obtained according to the user number: the permanent personnel attribute is obtained through retrieving the record of the permanent personnel; the user attribute is obtained through the list of number segment, such as the local user or the ecdemic user;
Step S206, whether the current user can receive the advertising information or not is determined according to the user attribute and combining with the current area configuration, the process of the concrete service determination refers to Fig.3;
Step S207, the user which meets the condition obtains and transmits the advertising, and the advertising content shall be issued according to area description; different contents will be set according to the de-massing setting such as the user attribute and the like; specific information for the user group of each area shall be customized, and the limits for the information contents about government actions or commonweal behaviors shall be relaxed.

Further, in step S205 and S206, aiming at the checking of the user attribute, the service de-massing optimization strategy also comprises the following detailed process as shown in Fig.3:
Step S310, according to whether the user attribute is permanent personnel or not, the de-massing breakdown advertising service process concretely comprises:
Step S311, the continuous active number of days of the user in the area is monitored in the preset days, whether the active number of days meets the time limit condition of the permanent personnel in the area or not is determined, if yes, the user will be set as the permanent personnel, and step S313 will be executed, otherwise, step S315 will be executed;
Step S313, the permanent personnel is filtrated through checking the attribution setting of the cell and whether the service treatment of the permanent personnel is performed or not. That is to say, the attribute setting of the current area for the permanent personnel is checked, and whether the permanent personnel in the current area is allowed to receive the advertising information or not is determined, the attributing setting that meets the strategy will enter to S320 process, otherwise the service strategy filtering will be ended in advance;
Step S315, the nonpermanent personnel also needs to be filtrated according to the attribute setting of the cell and whether the service treatment of the nonpermanent personnel is performed or not. That is to say, the attribute setting of the current area is checked, and whether the nonpermanent personnel in the current area is allowed to receive the advertising information or not is determined, the attributing setting that meets the strategy will enter to S320 process, otherwise the service strategy filtering will be ended in advance;
Step S320, according to the user attribute and combining with the area setting, whether the current user can be performed de-massing breakdown advertising service process of service treatment is determined, the service process will be ended in advance if the condition is not met, otherwise other service strategy filtering will be performed, which concretely comprises:
Step S321, whether the current user number is the local number or not is determined, if yes, step S323 will be executed, otherwise step S325 will be executed;
Step S323, the local user of the local number needs to be filtrated according to the attribute setting of cell and whether the service treatment of the local user is performed or not. That is to say, the attribute setting of the current area for the local user is checked, and whether the local user in the current area is allowed to receive the advertising information or not is determined, the attributing setting that meets the strategy will enter to S207 process, otherwise the service strategy filtering will be ended in advance;
Step S325, the ecdemic user of the non-local number needs to be filtrated according to the attribute setting of cell and whether the service treatment of the local user is performed or not. That is to say, the attribute setting of the current area for the ecdemic user is checked, and whether the ecdemic user in the current area is allowed to receive the advertising information or not is determined, the attributing setting that meets the strategy will enter to S207 process, otherwise the service strategy filtering will be ended in advance;

The service de-massing technique in the above-mentioned detailed description can use the various prior possible proposals according to the actual application which have been known well by the technician of the filed, and the details will not be described herein.

In a word, the de-massing method of position advertising service based on a area strategy and the system thereof provided by the detail description of the present invention pertinently expands the position advertising marketing of the service system, reduces the issuing of inefficient advertising, alleviates the impact of the service system to the information issuing system network, improves the operation efficiency of the service system, increases the income of the operators, saves the social resources, and meets the information requirements of social individuals by using the wireless mobile communication network which has broad covering scope currently, and by combining the information of regional position, statistical characteristic of the user, requirement characteristic of the group and the like.

What should be understood is that the description of the above-mentioned proposal can be improved or varied for the common technicians in the filed, for example the de-massing breakdown method performed by using other user attributes, and any amendments and variations of the present invention are all concluded in the scope of protection of the present invention.

## Claims

1. A de-massing method of position advertising service based on an area strategy, comprising the following steps:
A, according to data request(s) of the position advertising service, analyzing the user number in the corresponding area, and checking a area state of the area corresponding to the current data request, ;
B, obtaining the user attribute of the user number in the corresponding area, configuring the area strategy of the area corresponding to the user attribute ;
C, filtering position advertising information according to the area strategy, and then transmitted to the user number in the corresponding area.

2. The method according to Claim 1, **characterized in that** the step A further comprises the following steps:
A11, judging whether the state of the area is in an efficient state or not;
A 12, if it is in an efficient state, then entering step B; otherwise the current user will be discarded in inefficient state.

3. The method according to Claim 2, **characterized in that** step A further comprises the following steps:
A21, distinguishing the users are Local user and ecdemic user, according to the number segment of the user number in the area;
A22, ecdemic users of local province and other province are distinguished according to the number segment of the ecdemic user number.

4. The method according to Claim 3, **characterized by**, further comprising the following steps after the step A22:
A23, identifying the user is Short number user groups, according to the group attribute to which the user number segment in the area is subjected.

5. The method according to Claim 4, **characterized in that** step B further comprises the following steps:
B11, detecting whether the current time is the efficient service time that allows the user to receive the information in the area or not;
B12, if it is the efficient service time, then entering step C; otherwise quitting the detecting process.

6. The method according to Claim 5, **characterized by**, the step B11 further comprising:
B13, comparing whether the quantity of the issued information exceeds the upper limit of the information receiving quantity or not, if it exceeds, entering step B23, otherwise quitting the comparing process.

7. The method according to Claim 6, **characterized in that** step C further comprises the following steps:
C11, monitoring the continuous active number of days of the user in the area in preset days;
C12, judging whether the time limit condition of the permanent personnel in the area is met or not, if it is met, setting the user as the permanent personnel, and entering step C13, otherwise entering step C14;
C13, checking the attribute setting of the current area, and judging whether the permanent personnel in the current area is allowed to receive the advertising information or not, if it is allowed, then allowing the transmitting of the position advertising information, otherwise ending the service strategy filtering in advance.
C 14, checking the attribute setting of the current area, and judging whether the nonpermanent personnel in the current area is allowed to receive the advertising information or not, if it is allowed, then allowing the transmitting of the position advertising information, otherwise ending the service strategy filtering in advance.

8. The method according to Claim 7, **characterized in that** step C further comprises the following steps:
C21, judging whether the current number is local number or not, if it is local number, entering step C22, otherwise entering step C23;
C22, checking the attribute setting of the current area, and judging whether the local user in the current area is allowed to receive the advertising information or not, if it is allowed, then allowing the transmitting of the position advertising information, otherwise ending the service strategy filtering in advance.
C23, checking the attribute setting of the current area, and judging whether the ecdemic user in the current area is allowed to receive the advertising information or not, if it is allowed, then allowing the transmitting of the position advertising information, otherwise ending the service strategy filtering in advance.

9. A de-massing system of position advertising service based on an area strategy comprises: a service system and a content system communicated with the service system, **characterized by**,
the service system, is adapted to analyse the user number in the area, to check the area state of the area corresponding to the current data request, to obtain the user attribute, and to configure the area strategy of the area corresponding to the user attribute;
the content system, is adapted to filter the transmitting of the position advertising information according to the area strategy, realizing the de-massing of the position adverting service.

10. The system according to Claim 9, **characterized in that** the system further comprises a signaling acquisition system communicated with the service system communication which is connected with an interface between a base station controller and a mobile switching center, and is adapted to analyse the user information and the cell information, to transmit the information to the service system through a data link.
